# EUROPEAN PATENT APPLICATION

(11) **EP 2 182 667 A2**
(43) Date of publication of application: **05.05.2010**
(21) Application number: 09174289.0
(22) Date of filing: 28.10.2009
(51) Int. Cl.: H04L 1/18

(54) **Wireless communication apparatus and wireless communication method**

(30) Priority: 29.10.2008 JP 2008277851
(71) Applicant: Sony Corporation, Tokyo (JP)
(72) Inventor: Kikuchi, Kazunori, TOKYO (JP); Satoh, Yoshinori, TOKYO (JP); Tsurumoto, Takashi, TOKYO (JP); Nakano, Masahiro, TOKYO (JP)
(74) Representative: Thévenet, Jean-Bruno

(57) **Abstract**

A wireless communication system includes a transmitting side equipped with a microcomputer for control, for transmitting data and also includes a receiving side for receiving data. To prevent the receiving side from receiving identical data more than once, a sequence number is automatically incremented every time a frame of transmit data is transmitted. The sequence number is transmitted together with the data. The next process is performed if it is determined that transmission is correctly performed, or the data is transmitted again without incrementing the sequence number if it is determined that the transmission is not correctly performed. The sequence number is returned to an initial value when the microcomputer for control is reset, and dummy data is transmitted together with the initial value immediately after a reset. The data is transmitted together with an incremented sequence number after transmission of the dummy data.

## Description

### BACKGROUND OF THE INVENTION

### 1. Field of the Invention

The present invention relates to a wireless communication apparatus and a wireless communication method applied to, for example, remote control of an electronic device based on wireless communication.

### 2. Description of the Related Art

To remotely control an electronic device such as a television set, wireless communication in an Industrial, Scientific, and Medical use (ISM) band in the 2.4-GHz band is advantageous because, compared with infrared communication, there is less influence by an obstacle, and wireless signals travel farther. Furthermore, because a receiving side returns an acknowledgement and retransmission is performed even if the communication fails, there is another advantage that an operation is transmitted without fail.

When a command is transmitted in a remote control system based on such radio frequency communication (also referred to below as RF) system, data is divided into packets and transmitted. A single frame that includes data of each packet is added with numeral data (referred to below as a sequence number) that increments at the time of each transmission. It is possible to determine which ones have been transmitted in the data stream by checking the sequence number. The sequence number increments up to a predetermined value and then returns to its initial value, due to a restriction on the number of bits.

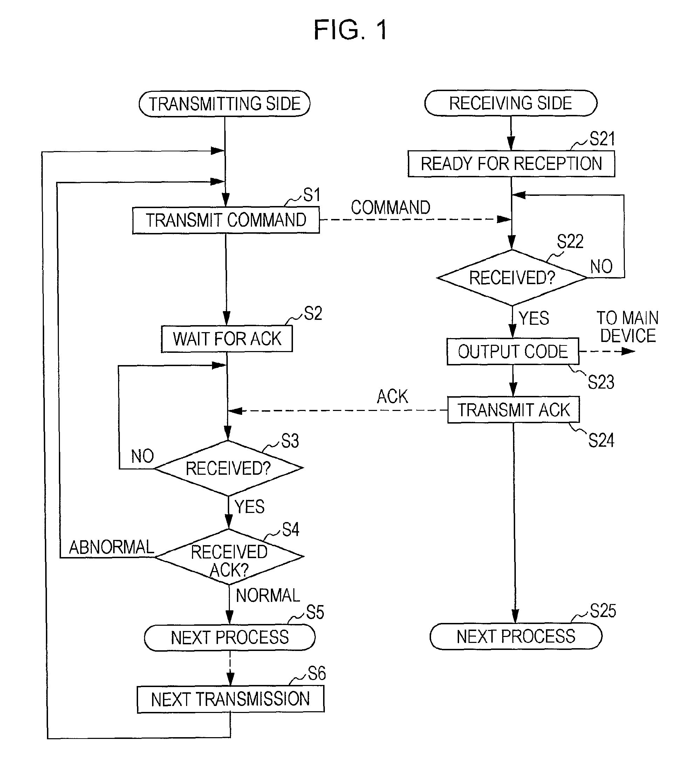

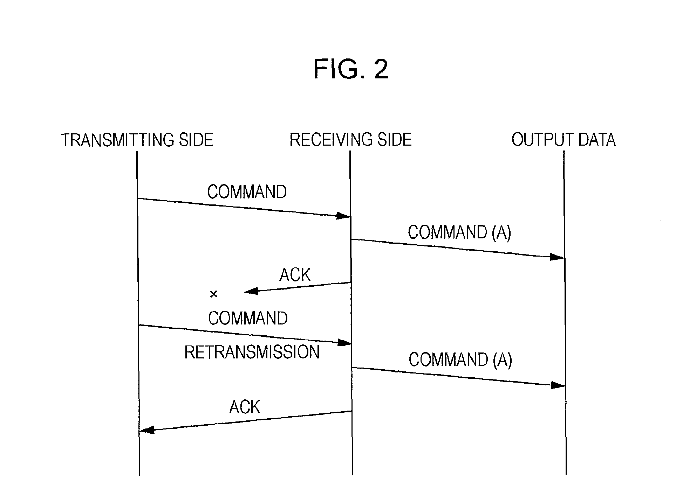

Figs. 1 and 2 respectively show a procedure of a process and a communication sequence in wireless communication when control by the sequence number is not performed. At Step S1, a command is transmitted from a transmitting side such as a transmitter module provided in a remote controller. The transmitter module then waits for an acknowledgement (ACK) (Step S2). A receiver module provided in a main device on a receiving side such as a television set is ready for receiving the command (Step S21). At Step S22, it is determined whether the command has been received or not. At Step S23, a received command (A) is supplied to a control unit in the television set as a code output (output data). At Step S24, the ACK is transmitted.

At Step S3, the transmitter module receives the ACK from the receiver module. If the ACK is not received, the process returns to Step S1, and the command is retransmitted from the transmitter module. The command (A) is output from the receiver module as the output data. When the ACK is transmitted and received without fail, the next process is performed (Steps S5, S6, and S25).

In this manner, if control based on sequence numbers is not performed, there is a risk of double receipt in which an identical command (A) is received a plurality of times (two times in Fig. 2).

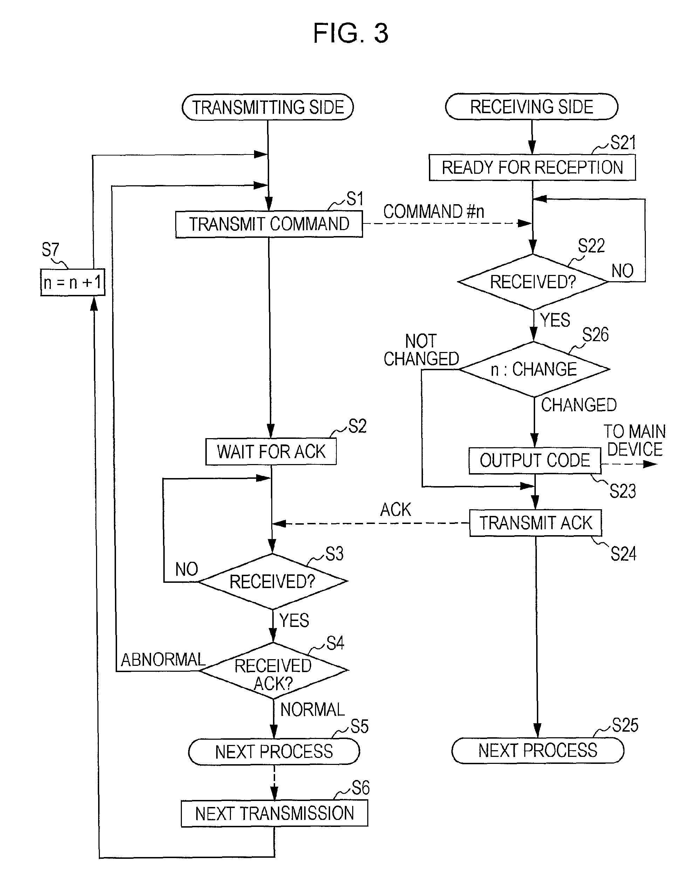

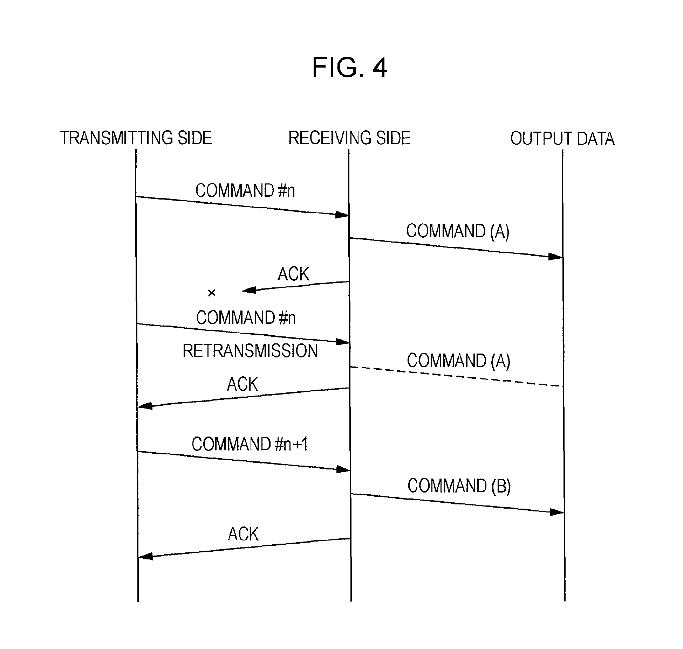

To perform the control based on sequence numbers, as shown in Figs. 3 and 4, when the transmitter module transmits a command, a sequence number that increments every time a single command is transmitted is transmitted together with the command. For example, at Step S1, sequence number n (preceded by # in the drawings) is transmitted together with the command. On the receiving side, the sequence number of the command (A) received at Step S22 is examined at Step S26. At Step S26, it is determined whether the sequence number has changed from the previous value or not.

If it is determined that the sequence number has changed at Step S26, a code is output at Step S23, and an ACK is transmitted at Step S24.

If the transmission or receipt failed at the previous transmission of the command, the identical command and the identical sequence number are retransmitted. If the receiver module determines, at Step S26, that the value of the sequence number n is equal to the value received previously, the receiver module skips the process of the code output at Step S23. In other words, the receiver module determines that the received command (A) is identical to the command received previously, discards the received command, and transmits an ACK.

Further explained below is a process performed when a microcomputer that controls the transmitter module is reset. When power is turned off, for example, by removing a battery from a remote controller, the microcomputer is reset. The microcomputer may be reset by a specific key input. When the microcomputer is reset, the sequence number returns to its initial value.

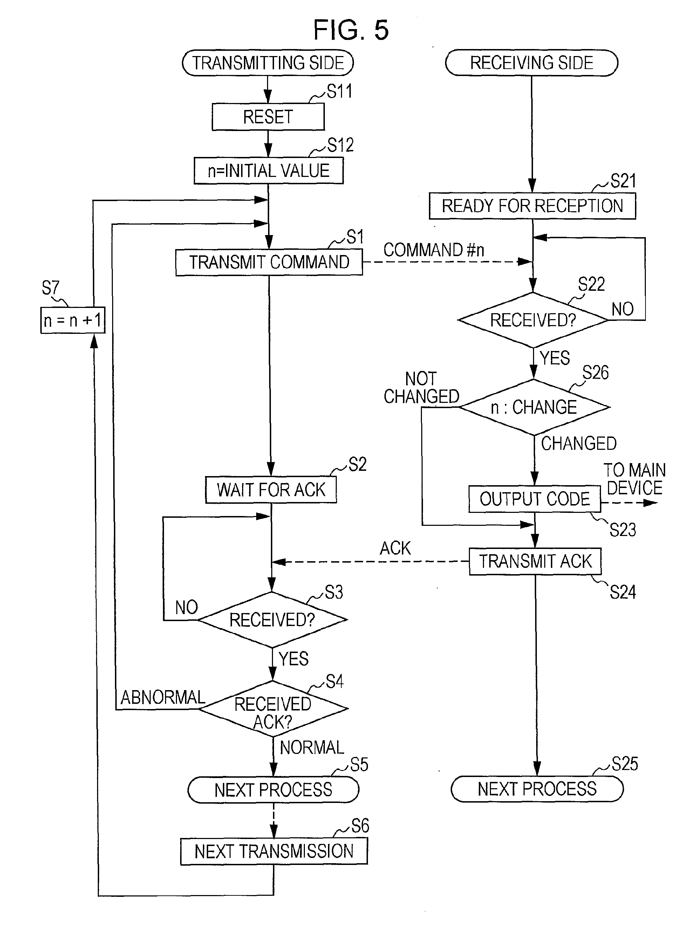

Fig. 5 shows an example of a process in which a reset does not cause any problem. When a reset is performed at Step S11 in Fig. 5, the sequence number returns to its initial value at Step S12. Accordingly, the value of the sequence number transmitted together with the command at Step S1 is n. The receiver module determines that the sequence number received this time is different from the sequence number received together with the previous command, and outputs the code to the main device at Step S23.

As explained above with reference to Fig. 5, when a reset (RST1) of the microcomputer in the transmitter module is performed, the sequence number of the command transmitted immediately after the reset is set to n. If the sequence number immediately before the reset is not n, transmission and reception are regarded as having been normally performed and a command (A) is output from the receiver module. The receiver module stores the value n of the sequence number.

However, if the sequence number immediately before the RST1 is the initial value n, an error process is performed, because the sequence number immediately after the reset is set to the initial value, which is equal to the sequence number immediately before the RST1. As a result, there is a problem that transmission of the command (A) is prevented.

To solve this problem, for example, Japanese Unexamined Patent Application Publication No. 2003-218876 proposes a technology of applying a specific sequence number that is not normally used, when the transmission is performed after a reset. According to the technology proposed in Japanese Unexamined Patent Application Publication No. 2003-218876, because the sequence number after the reset is different from the initial value, the receiver module can correctly receive the command transmitted immediately after the reset.

### SUMMARY OF THE INVENTION

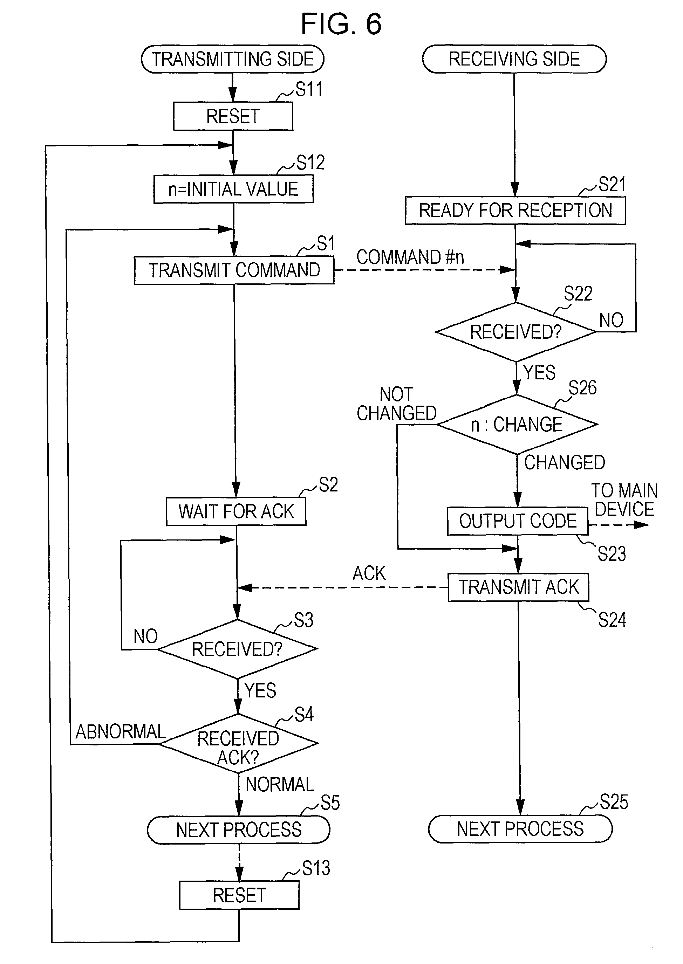

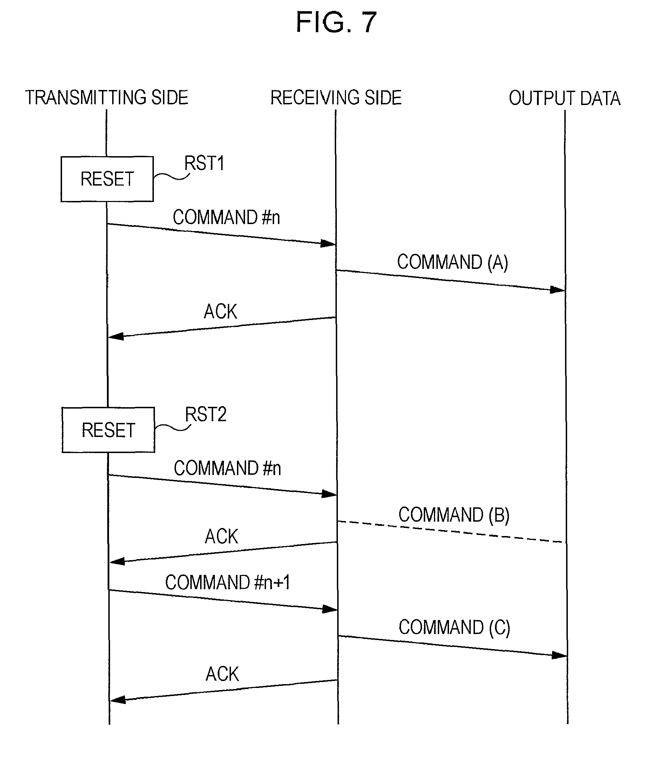

With reference to Figs. 6 and 7, a problem caused when resets are successively performed is explained. A case is considered in which the first reset RST1 is performed at Step S11, the command and the sequence number n, which is the initial value, are transmitted, and another reset (RST2) is performed at Step S13. If the command is transmitted immediately after the RST1 and then the RST2 is performed as described above, the sequence number of the command transmitted immediately after the RST2 is set to n at Step S12.

Because the sequence number is equal to the previous value n, the receiver module determines that the sequence number has not changed at Step S26. As a result, the command (B) is discarded. Furthermore, when a command is transmitted next time, the sequence number is set to n+1. Because the sequence number is thus incremented, the receiver module determines that a different command is received, and outputs a command (C) as the output data.

In this manner, if the command is transmitted immediately after the RST1 of the microcomputer on the transmitting side and then the RST2 of the microcomputer is performed, there is a problem that the command immediately after the reset is discarded. It is difficult to solve this problem even by the technology of setting the sequence number immediately after the reset to a value that is not normally used, as disclosed in Japanese Unexamined Patent Application Publication No. 2003-218876.

There is another problem with the technology described in Japanese Unexamined Patent Application Publication No. 2003-218876 in that the number of types of usable sequence numbers decreases by one. For example, to issue a sequence numbers using 8-bit data, there can be 256 different sequence numbers. However, if a specific number, such as "00", is assigned as an initial value, only 255 sequence numbers remain for normal use.

Therefore, it is desired to provide a wireless communication apparatus and a method of wireless communication based on RF signals, which can solve these problems.

According to an embodiment of the present invention, there is provided a wireless communication system having a transmitter for transmitting data, the transmitter being equipped with a microcomputer for control, and also having a receiver for receiving data. The wireless communication system transmits a sequence number together with data to prevent the receiving side from receiving identical data more than once, the sequence number being automatically incremented every time a frame of transmit data is transmitted, performs a next process if it is determined that the transmission is correctly performed, transmits the data again without incrementing the sequence number if it is determined that the transmission is not correctly performed, returns the sequence number to its initial value when a microcomputer for control is reset, transmits dummy data together with the initial value immediately after the reset, and transmits the data together with an incremented sequence number after transmission of the dummy data.

Whether transmission has been correctly performed or not is determined depending on whether an acknowledgement is received from the receiving side or not.

A command for remote control of an electronic device is transmitted.

According to another embodiment of the present invention, there is provided a wireless communication method. The wireless communication method includes the steps of transmitting a sequence number together with data to prevent the receiving side from receiving identical data more than once, the sequence number being automatically incremented every time a frame of transmit data is transmitted, performing the next process if it is determined that the transmission is correctly performed, transmitting the data again without incrementing the sequence number if it is determined that the transmission is not correctly performed, returning the sequence number to its initial value when a microcomputer in a control unit is reset, transmitting dummy data together with the initial value immediately after the reset, and transmitting the data together with an incremented sequence number after transmission of the dummy data.

According to the embodiments of the present invention, when the microcomputer in the control unit is reset, dummy data is transmitted together with the initial value of the sequence number. After that, real data is transmitted together with an incremented sequence number. Therefore, even if the reset is performed successively, the sequence number is different from the previous value, and new data is not discarded. Furthermore, all types of the available sequence numbers can be used.

### BRIEF DESCRIPTION OF THE DRAWINGS

Fig. 1 is a flowchart of a process performed when control based on sequence numbers is not performed;
Fig. 2 is a schematic diagram of a communication sequence when the control based on the sequence numbers is not performed;
Fig. 3 is a flowchart of a process performed when the control based on the sequence numbers is performed;
Fig. 4 is a schematic diagram showing an example of a communication sequence when the control based on the sequence numbers is performed;
Fig. 5 is a flowchart of a process performed when the control based on the sequence numbers is performed and the reset is performed;
Fig. 6 is a flowchart of a process performed when the control based on the sequence numbers is performed and the reset is performed;
Fig. 7 is a schematic diagram showing an example of a communication sequence used to explain a problem when the control based on the sequence numbers is performed and the reset is performed;
Fig. 8 is a block diagram schematically showing a configuration of a communication system according to an embodiment of the present invention;
Fig. 9A is a block diagram showing a configuration of a transmitter module based on RF signals, and Fig. 9B is a block diagram showing a configuration of a receiver module based on the RF signals;
Fig. 10 is a schematic diagram showing an example of a configuration of a transmission frame;
Fig. 11 is a flowchart of a process performed according to an embodiment of the present invention; and
Fig. 12 is a schematic diagram showing an example of a communication sequence according to an embodiment of the present invention.

### DESCRIPTION OF THE PREFERRED EMBODIMENTS

Explained below is a best mode (referred to below as an embodiment) for carrying out the present invention. Explanations are given in the following order:
1. Embodiment
2. Modification

Although the embodiment given below is a preferable and specific example provided with technically preferable restrictions, the scope of the present invention is not limited to the embodiment unless the following explanation includes any description that limits the present invention.

### <1. Embodiment>

### [Outline of Communication System]

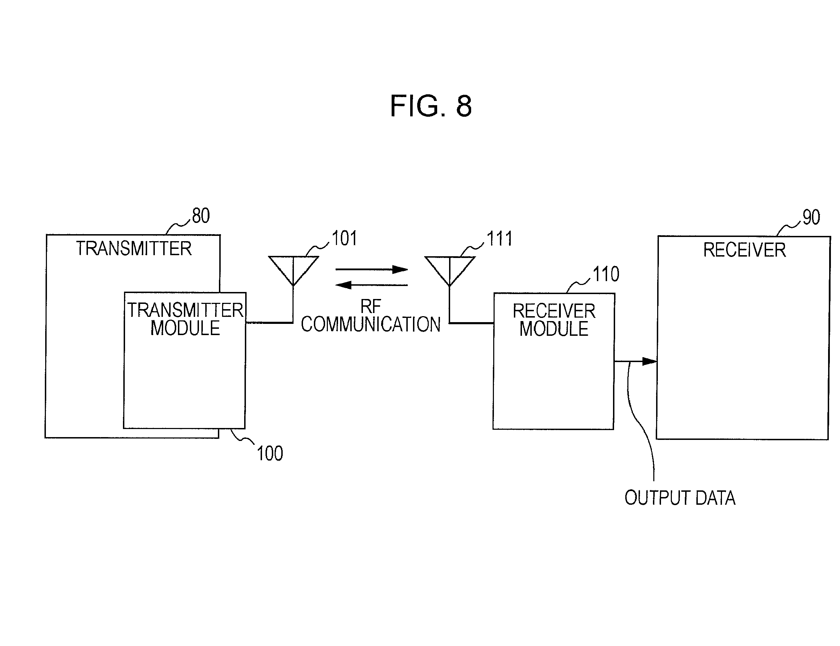

As shown in Fig. 8, a transmitter module 100 in a transmitter 80 and a receiver module 110 in a receiver 90 perform radio frequency (RF) wireless communication with each other. Denoted by reference numeral 101 is a transmitting antenna, and 111 is a receiving antenna. In the case of bidirectional communication, another pair of the transmitter module and the receiver module is added. The receiver module 110 supplies the receiver 90 with the received output data.

For example, the transmitter 80 may be a commander for a remote controller, and the receiver 90 may be a television set. A command corresponding to key input to the remote controller is supplied to a control unit of the television set 90. The command is transmitted from the transmitter module 100 to the receiver module 110. The receiver module 110 transmits an acknowledgement (ACK) to the transmitter module 100.

With such a remote control system based on RF signals, there is a risk of unintentionally controlling a device located in an adjacent room or an adjacent house. Therefore, when a new television set is purchased and placed, a one-to-one correlation (referred to as pairing) should be provided to enable control of the television set by the commander. Pairing means mutually exchanging identification information (ID) between a remote controller and a remotely controlled electronic device.

### [Example of Transmitter and Receiver]

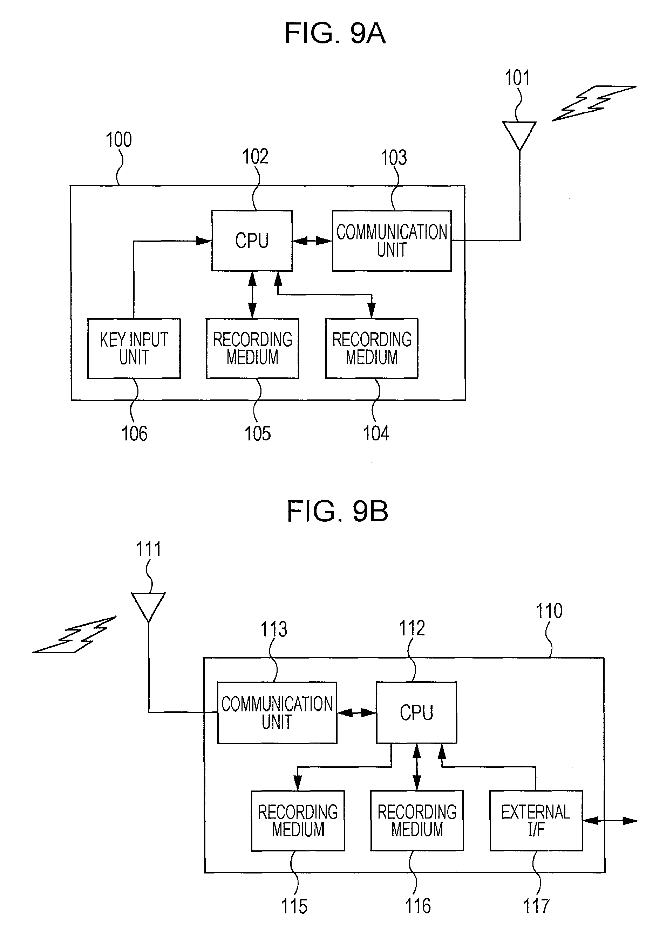

As shown in Fig. 9A, the remote controller 100 includes the antenna 101 to transmit and receive radio wave. The remote controller 100 also includes a central processing unit (CPU) 102 as a control unit that runs programs corresponding to communication functions, read and write operations on a recording medium, and various key inputs.

A communication unit 103 for wireless communication transmits remote control signals via the antenna 101. The ID of an electronic device paired with the remote controller 100 is stored in a recording medium 104. The ID of the remote controller 100 and a category code of the electronic device to be paired first are stored in a recording medium 105. The remote controller 100 also includes a key input unit 106 having keys.

Each of the recording media 104 and 105 is configured with, for example, a writable nonvolatile memory. The CPU 102 is an embedded microcomputer, which includes a read only memory (ROM), a random access memory (RAM), or the like, and controls each part of the remote controller 100 in an integrated manner by executing programs stored in the ROM.

As shown in Fig. 9B, the receiver module 110 provided in the electronic device includes the antenna 111 to transmit and receive radio wave. The receiver module 110 also includes a CPU 112 that runs programs corresponding to communication functions, read and write operations on a recording medium, and various key inputs, and a communication unit 113 for wireless communication.

The ID and category code (for example, a code indicative of a category of the television set) of the electronic device are stored in a recording medium 116. The receiver module 110 includes an external interface 117 for communication with, for example, the television set. The CPU 112 controls each part of the receiver module 110 in an integrated manner. Each of a recording medium 115 and the recording medium 116 is configured with, for example, a writable nonvolatile memory.

The communication unit 103 of the remote controller 100 and the communication unit 113 of the receiver module 110 bidirectionally communicate with each other based on a predetermined wireless communication system. The communication system can be, for example, a system complying with Institute of Electrical and Electronics Engineers (IEEE) 802.15.4. IEEE 802.15.4 is a name of a short-range wireless network standard called Personal Area Network (PAN) or Wireless Personal Area Network (WPAN). The receiver module 110 is configured to output a received command to the electronic device connected to the external interface 117, such as the television set.

The communication rate of this standard is tens to hundreds of kbps, and the communication distance is tens to hundreds of meters. Communication is performed in units of frames. A single frame size is 133 bytes at the maximum including a payload of 0 to 127 bytes and a header of 6 bytes. This communication system enables a plurality of modes for transmitting and receiving data. In the case of the remote control system, the most simplified method is employed; the remote controller 100 transmits a command to the receiver module 110, and the remote controller 100 receives a response from the receiver module 110. However, more complicated method of transmitting and receiving data can be used.

### [Outline of Data Configuration in Single Frame]

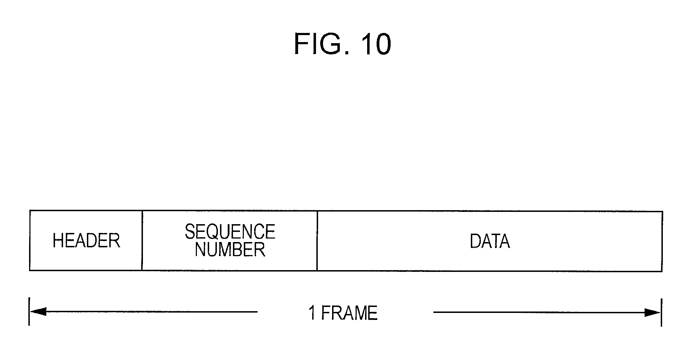

A configuration of wireless communication data communicated between the transmitter module 100 and the receiver module 110 is schematically shown in Fig. 10. A header is located at the top of the frame, and a sequence number is inserted as part of the following code, followed by data (payload) including a command. The RF system is identified by the header. Code information indicates the type of the following data, i.e., whether it is data for pairing or command data.

The sequence number is numeral data that increments at the time of each transmission. It is possible to determine which ones have been transmitted in the data stream by checking the sequence number. The receiver module is prevented from receiving identical data more than once by controlling the sequence numbers. The sequence number increments up to a predetermined value and then returns to its initial value, due to a restriction on the number of bits. For example, in the case of using 8-bit sequence numbers, the sequence number returns to the initial value after counting up to the last of the 256 different sequence numbers.

### [Flow of Process According to Embodiment]

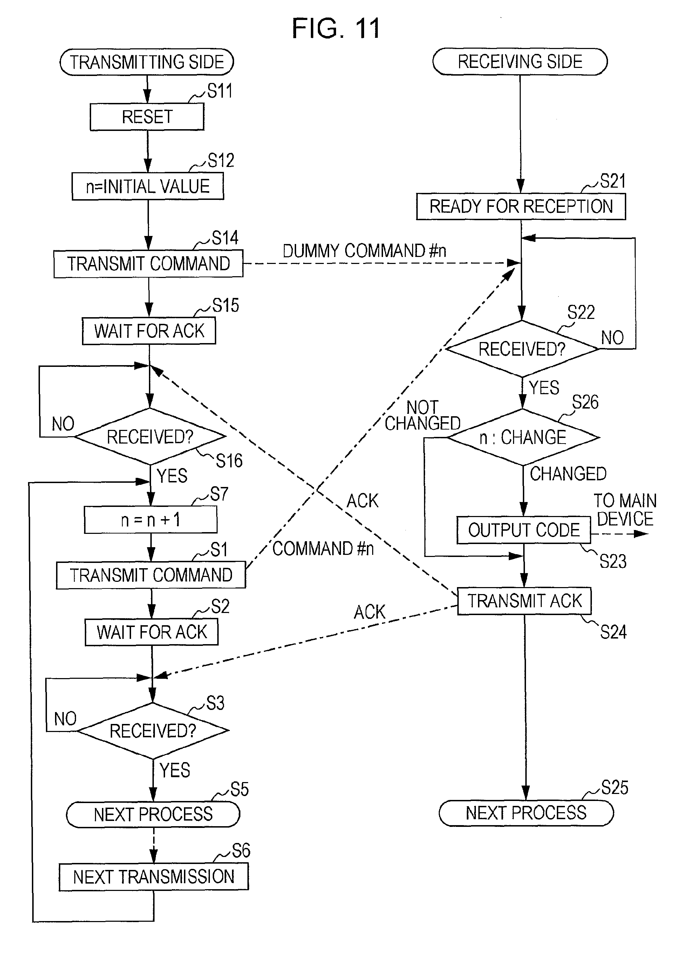

The CPU 102 of the transmitter module 100 shown in Fig. 9A and the CPU 112 of the receiver module 110 shown in Fig. 9B perform a process shown in a flowchart in Fig. 11. When a reset RST1 is performed at Step S11 shown in Fig. 11, the sequence number is returned to the initial value n at Step S12. The initial value n is one of the available sequence numbers. The initial value may differ from a value to which the sequence number returns after it increments up to its maximum value, such as zero.

Next, a command is transmitted at Step S14 and the transmitter module enters the state of waiting for an ACK (Step S15). At Step S14 immediately after the reset, a dummy command is transmitted. The dummy command is specific known data that is not used for pairing or commanding.

With the frame configuration described above, the sequence number n is transmitted together with the dummy command. The receiver module is ready for reception (Step S21), and the dummy command and the sequence number n are received at Step S22. The dummy command and the sequence number n received are stored in the memory in the receiving side.

At Step S26, it is determined whether the sequence number of the received command has changed from the previous value stored in the memory or not. If it is determined that the sequence number has changed at Step S26, the dummy command is output at Step S23, and an ACK is transmitted at Step S24.

If it is determined that the sequence number has not changed at Step S26, the ACK is transmitted at Step S24 without performing the process at Step S23. In the case of the dummy command, there will be no difficulty if the dummy command is discarded without being output. On the other hand, even if the dummy command is output, the receiver determines that the output data is a dummy command because the dummy command is known data. The dummy command is thus ignored.

The ACK transmitted at Step S24 is received by the receiver module (Step S16). When the ACK is transmitted and received without fail, the sequence number is incremented to n+1 at Step S7.

Next, the command and the sequence number n+1 are transmitted at Step S1 and the transmitter module enters a state of waiting for an ACK (Step S2). At Step S2, the command is transmitted. The receiver module is ready for reception (Step S21), and receives the command and the sequence number n+1 at Step S22.

At Step S26, it is determined whether the sequence number of the received command has changed from the previous value or not. The previous sequence number is n, and the sequence number received is n+1. Thus, at Step S26, it is determined that the sequence number has changed. The command is output to the receiver, such as the television set, at Step S23, and the ACK is transmitted at Step S24.

The ACK transmitted at Step S24 is received by the transmitter module (Step S3). After that, subsequent processes (Steps S5 and S6) are performed. To transmit the next command then, the sequence number is incremented to n+2 at Step S7.

If the reset operation is performed again on the transmitting side after receiving the ACK at Step S3, the process returns to Step S11, and then the sequence number is set to the initial value at Step S12. As described above, when a command is transmitted immediately after the reset, the dummy command is transmitted. When the dummy command is correctly received, the ACK is received from the receiver module at Step S16.

The sequence number stored in the receiver module is set to n+1 due to the transmission of the dummy command after the first reset. The sequence number is then set to n due to the transmission of the dummy command after the second reset. Accordingly, when a command is transmitted after the second reset and the second transmission of the dummy command, the sequence number n+1 is transmitted together with the command.

Accordingly, at Step S26, it is determined that the sequence number has changed from n to n+1. Because it is determined there has been a change, a command is transmitted to the receiver at Step S23. The command transmitted after the first reset may be identical to or different from the command transmitted after the second reset.

In this manner, according to an embodiment of the present invention, the sequence number stored in the receiver module is returned to the initial value by the transmitter module transmitting the dummy command immediately after the reset. As a result, even when the reset is successively performed, the command can be transmitted without difficulty. For example, in the paring process, the process is terminated after transmitting and receiving a series of data. Accordingly, there is a risk that the pairing process is difficult to complete if the data transmission fails once. However, according to an embodiment of the present invention, such a risk can be avoided.

### [Specific Example of Process According to Embodiment]

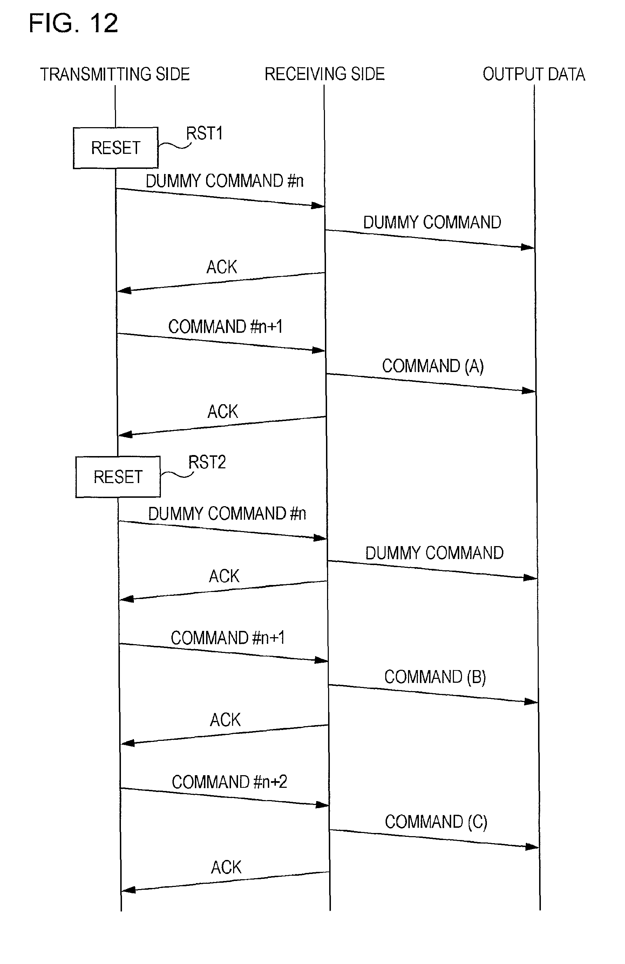

Fig. 12 shows a communication sequence based on a specific example of a process according to an embodiment. The first reset RST1 is performed at Step S11, and then the dummy command and the sequence number n (initial value) are transmitted at Step S14. The dummy command is output as the output data. As described above, the dummy command may not be output to the main device. The ACK is transmitted at Step S24.

The transmitter module receives the ACK at Step S16, and the sequence number is changed from n to n+1 at Step S7. At Step S1, a command and the sequence number n+1 are transmitted.

The receiver module determines that the sequence number has changed at Step S26, and outputs the received command (A) to the main device. The receiver module then transmits the ACK at Step S24.

The second reset RST2 is performed. As with the first reset RST1, the dummy command and the sequence number n are transmitted. The sequence number stored on the receiving side is returned to the initial value n. Accordingly, when a command and the sequence number n+1 are transmitted next, it is determined that the sequence number has changed, and the command (B) is output from the receiver module. Another ACK is also transmitted.

In this manner, when the transmitter module is reset, because the sequence number before the reset is different from the sequence number after the reset, the new command in the form of a frame or a packet is not discarded. Subsequently, a command and the sequence number n+2 are transmitted, the command (C) is output from the receiver module, and an ACK is transmitted. Other commands are also transmitted in the same manner.

### <2. Modification>

The present invention is not limited to the embodiment described above, and various modifications can be made without departing from the technical concept of the present invention. For example, the embodiment of the present invention may be applied to wireless communication devices other than a television set and a remote controller constituting a remote control system. For example, the embodiment may be applied to other combinations of wireless communication devices that transmit and receive audio data and/or video data by wireless communication, such as a combination of an audio player and a wireless headphone, or a combination of an audio player and a portable digital music player.

The present application contains subject matter related to that disclosed in Japanese Priority Patent Application JP 2008-277851 filed in the Japan Patent Office on October 29, 2008.

## Claims

1. A wireless communication system having a transmitter (100) for transmitting data, the transmitter being equipped with a microcomputer (102) for control, and also having a receiver (110) for receiving data, wherein:
to prevent the receiver (110) from receiving identical data more than once, a sequence number automatically incremented every time a frame of transmit data is transmitted is transmitted together with the transmit data;
a next process is performed if it is determined that transmission is correctly performed, and the transmit data is transmitted again without incrementing the sequence number if it is determined that the transmission is not correctly performed;
the sequence number is returned to an initial value when the microcomputer (102) for control is reset, and dummy data is transmitted together with the initial value immediately after a reset; and
the transmit data is transmitted together with an incremented sequence number after transmission of the dummy data.

2. The wireless communication apparatus according to Claim 1, wherein whether transmission has been correctly performed or not is determined depending on whether an acknowledgement is received from the receiver (110) or not.

3. The wireless communication apparatus according to Claim 1, wherein a command for remote control of an electronic device is transmitted.

4. A wireless communication method comprising the steps of:
transmitting a sequence number automatically incremented every time a frame of transmit data is transmitted, together with the transmit data, to prevent the receiver (110) from receiving identical data more than once;
performing a next process if it is determined that transmission is correctly performed, and transmitting the transmit data again without incrementing the sequence number if it is determined that the transmission is not correctly performed;
returning the sequence number to an initial value when the microcomputer (102) in a control unit is reset, and transmitting dummy data together with the initial value immediately after a reset; and
transmitting the transmit data together with an incremented sequence number after transmission of the dummy data.

5. The wireless communication method according to Claim 4, wherein whether transmission has been correctly performed or not is determined depending on whether an acknowledgement is received from the receiver (110) or not.

6. The wireless communication method according to Claim 4, wherein a command for remote control of an electronic device is transmitted.
